(19) Europäisches Patentamt
European Patent Office
Office européen des brevets

(11) **EP 4 741 531 A1**

(12) **EUROPEAN PATENT APPLICATION**
published in accordance with Art. 153(4) EPC

(43) Date of publication:
**13.05.2026 Bulletin 2026/20**

(51) International Patent Classification (IPC):
**C23C 22/66** (2006.01)     **B32B 15/04** (2006.01)
**B32B 15/20** (2006.01)

(21) Application number: **24839695.4**

(52) Cooperative Patent Classification (CPC):
**B32B 15/04; B32B 15/20; C23C 22/66**

(22) Date of filing: **05.07.2024**

(86) International application number:
**PCT/JP2024/024499**

(87) International publication number:
**WO 2025/013803 (16.01.2025 Gazette 2025/03)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.07.2023 JP 2023112267**

(71) Applicants:
• **Toyo Kohan Co., Ltd.**
**Tokyo 141-8260 (JP)**
• **Toyo Seikan Co., Ltd.**
**Tokyo 141-8640 (JP)**

(72) Inventors:
• **KASHIWAKURA, Takuya**
**Yokohama-shi Kanagawa 230-0001 (JP)**
• **NISHIDA, Kazuhiro**
**Yokohama-shi Kanagawa 230-0001 (JP)**
• **KANAZAWA, Seitaro**
**Yokohama-shi Kanagawa 230-0001 (JP)**
• **TAKEGUCHI, Shota**
**Kudamatsu-shi Yamaguchi 744-8611 (JP)**
• **TAKENAGA, Tomoyasu**
**Kudamatsu-shi Yamaguchi 744-8611 (JP)**
• **IKEBUCHI, Masashi**
**Kudamatsu-shi Yamaguchi 744-8611 (JP)**

(74) Representative: **Hoffmann Eitle**
**Patent- und Rechtsanwälte PartmbB**
**Arabellastraße 30**
**81925 München (DE)**

(54) **RESIN-COATED ALUMINUM CAN LID AND RESIN-COATED ALUMINUM PLATE**

(57) [Object]
To provide a resin-coated aluminum can lid having resin adhesiveness, corrosion resistance, and a color tone in combination.

[Solving Means]
A resin-coated aluminum can lid includes an aluminum base material, a surface treatment layer formed on at least one side of the aluminum base material, and a resin layer formed on the surface treatment layer. The surface treatment layer contains aluminum hydroxide, and has a Pa/Pb value of 0.14 to 3.50 when, in an infrared absorption spectrum measured by an FT-IR, a height of an absorbance peak at wavenumbers of 850 to 1000 $cm^{-1}$ is defined as Pa and a height of an absorbance peak at wavenumbers of 1000 to 1200 $cm^{-1}$ is defined as Pb.

FIG. 1

100

**Description**

[Technical Field]

This disclosure relates to a resin-coated aluminum can lid and a resin-coated aluminum sheet.

[Background Art]

Conventionally, as a metal material for application to food cans, beverage cans, and the like, aluminum sheets have suitably been used for their excellent lightweight property and readily forming processability. Further, resin-coated aluminum sheets obtained by forming a resin layer such as a coating film or a thermoplastic resin film on aluminum sheets have long been known as a material for cans, and the formation into can lids, which are to be applied to beverage cans or the like, by subjecting these resin-coated aluminum sheets to processing is also well known.

As aluminum sheets for use in resin-coated aluminum sheets for such can lids, surface-treated aluminum sheets to which surface treatment such as chemical treatment has been applied are used in general to secure corrosion resistance and adhesiveness after formation of resin layers. As such surface treatment, there is, for example, chromate phosphate treatment, and surface-treated aluminum sheets to which chromate phosphate treatment has been applied have widely been used for their excellent adhesiveness and corrosion resistance after the formation of resin layers. From the viewpoint of environment protection, however, there is an increasing demand for chromium-free surface treatment.

For example, in PTL 1 to PTL 4 described below, treatment that forms aluminum hydroxide on surfaces of an aluminum base material is disclosed as chromium-free surface treatment. It is also disclosed that containers and the like are formed using aluminum base materials subjected to such treatment.

[Citation List]

[Patent Literature]

[PTL 1]
JP 2003-013253A
[PTL 2]
JP 2004-216801A
[PTL 3]
JP 2007-176072A
[PTL 4]
JP H11-012762A

[Summary]

[Technical Problems]

An aluminum hydroxide film formed on a surface of an aluminum base material is considered to be a film composed primarily of alumina monohydrate (AlO(OH)) called boehmite. Boehmite is mainly used in sealing treatment for anodized aluminum films, and is known as a material having corrosion resistance. Boehmite is also known for its acicular texture having roughness on the surface. This acicular texture is considered to exhibit an anchoring effect to a resin layer such as a coating film or a film and hence improve resin adhesiveness.

If this aluminum hydroxide coating treatment is applied to a surface-treated aluminum sheet for use in can lids, however, there are such problems as will be described hereinafter. Described specifically, surface-treated aluminum sheets to be applied for use in can lids are used, depending on the use, in combinations with wide varieties of coating films and thermoplastic resin films. However, there were some cases where, when aluminum hydroxide coating treatment was combined with specific coating films or thermoplastic resin films, corrosion resistance and/or resin adhesiveness was deteriorated, and therefore, aluminum hydroxide coating treatment was not usable for a wide variety of use, unlike chromate phosphate treatment.

On the other hand, many of can lids made of aluminum sheets have an appearance making use of an excellent color tone, such as a beautiful silver white shade and a metallic gloss, of the aluminum base material. If the above-described aluminum hydroxide coating treatment is applied, however, there were cases where silver white shade and metallic gloss, which the aluminum base material inherently had, were lost, leading to an impairment in color tone.

The above-mentioned pieces of patent literature do not make sufficient consideration regarding adhesiveness with such a wide variety of coating films and thermoplastic resin films as described above and corrosion resistance after the formation of resin layers, by no means include any finding regarding the deterioration of a color tone of an aluminum base material attributable to an aluminum hydroxide film, and therefore do not solve such problems.

This disclosure has been made with a view to solve such problems, and has as an object thereof the provision of a resin-coated aluminum can lid that ensures adhesiveness and corrosion resistance even when combined with a wide variety of coating films and thermoplastic resin films and that also has an excellent color tone. Further, this disclosure also has as another object thereof the provision of a resin-coated aluminum sheet for manufacturing the above-described resin-coated aluminum can lid.

[Solution to Problems]

To solve the problems exemplified above, a resin-coated aluminum can lid according to an embodiment of the present invention includes an aluminum base material, a surface treatment layer formed on at least one side of the aluminum base material, and a resin layer formed on the surface treatment layer. The surface treatment layer contains aluminum hydroxide, and has a Pa/Pb value of 0.14 to 3.50 when, in an infrared absorption spectrum measured by a Fourier transform infrared spectrophotometer (FT-IR), a height of an absorbance peak at wavenumbers of 850 to 1000 $cm^{-1}$ is defined as Pa and a height of an absorbance peak at wavenumbers of 1000 to 1200 $cm^{-1}$ is defined as Pb.

In addition, to solve the problems exemplified above, a resin-coated aluminum sheet according to an embodiment of the present invention includes an aluminum base material, a surface treatment layer formed on at least one side of the aluminum base material, and a coating film formed on the surface treatment layer. The surface treatment layer contains aluminum hydroxide, and has a Pa/Pb value of 0.14 to 3.50 when, in an infrared absorption spectrum measured by an FT-IR, a height of an absorbance peak at wavenumbers of 850 to 1000 $cm^{-1}$ is defined as Pa and a height of an absorbance peak at wavenumbers of 1000 to 1200 $cm^{-1}$ is defined as Pb.

[Advantageous Effect of Invention]

According to this disclosure, a resin-coated aluminum can lid having resin adhesiveness, corrosion resistance, and a color tone in combination can be provided.

[Brief Description of Drawing]

[FIG. 1]

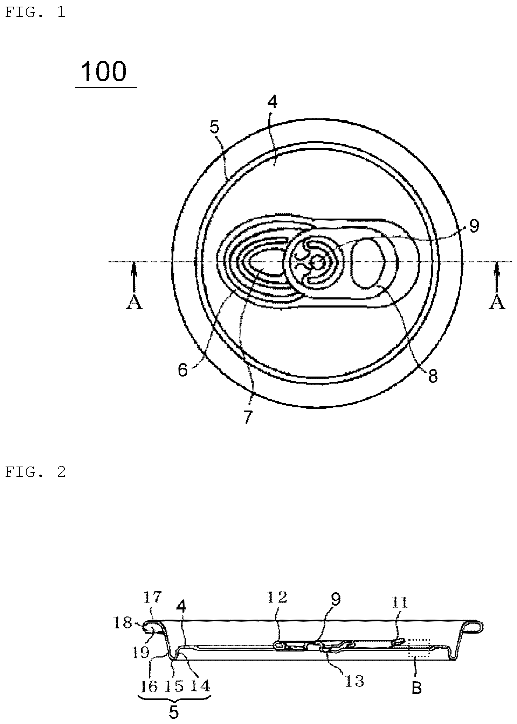

FIG. 1 is a plan schematic view of a resin-coated aluminum can lid in an embodiment.
[FIG. 2]
FIG. 2 is a cross-sectional schematic view of the resin-coated aluminum can lid in the embodiment.
[FIG. 3]

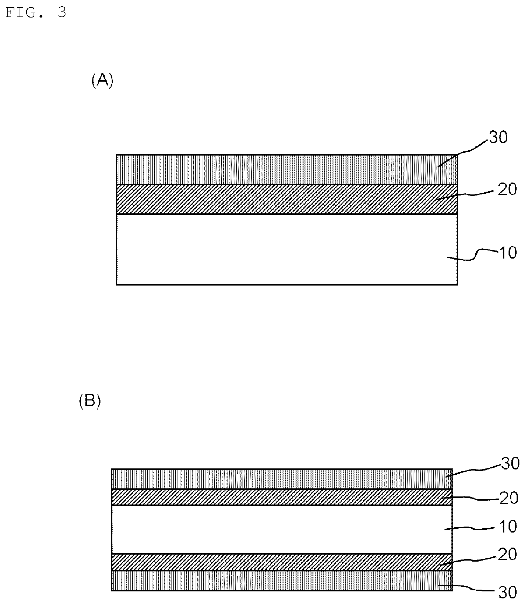

FIG. 3 depicts cross-sectional schematic views of the resin-coated aluminum can lid according to the embodiment.
[FIG. 4]

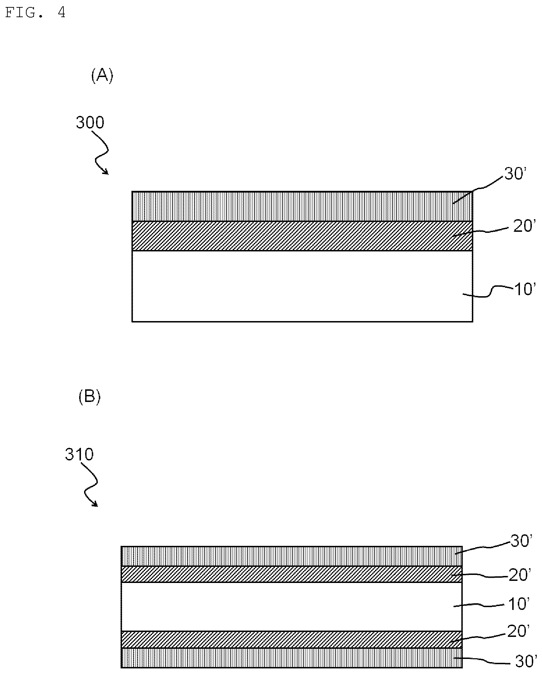

FIG. 4 depicts cross-sectional schematic views of resin-coated aluminum sheets according to an embodiment.
[FIG. 5]

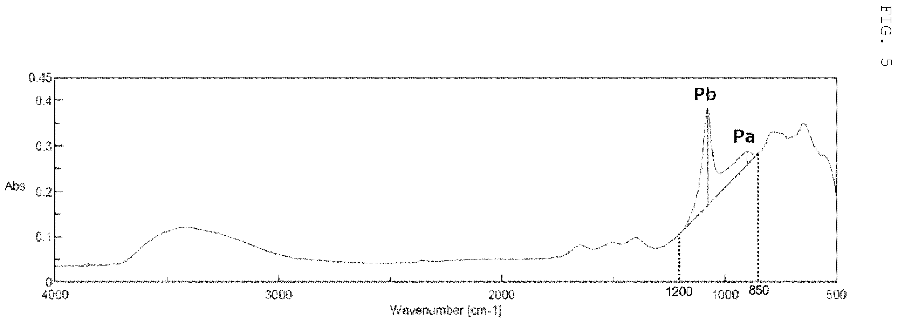

FIG. 5 is a diagram illustrating an example of an infrared absorption spectrum.
[FIG. 6]

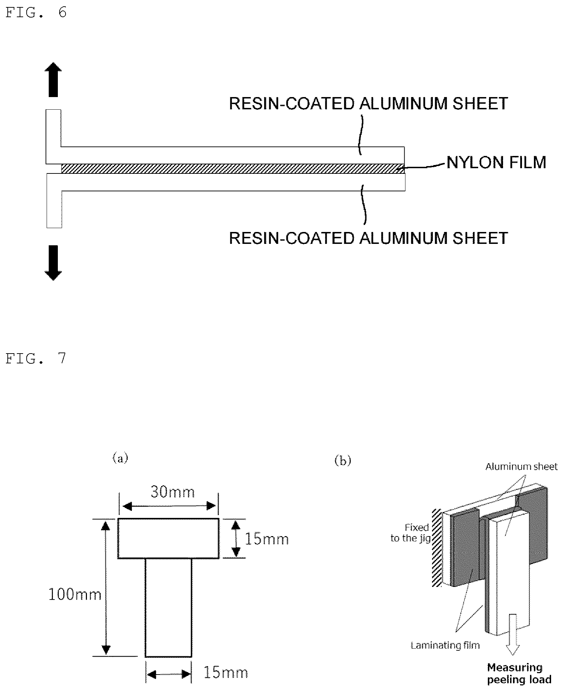

FIG. 6 is a view schematically depicting a specimen for use in coating film adhesiveness evaluation.
[FIG. 7]
FIG. 7 depicts views schematically depicting a specimen and a testing method for use in resin adhesiveness evaluation.
[FIG. 8]

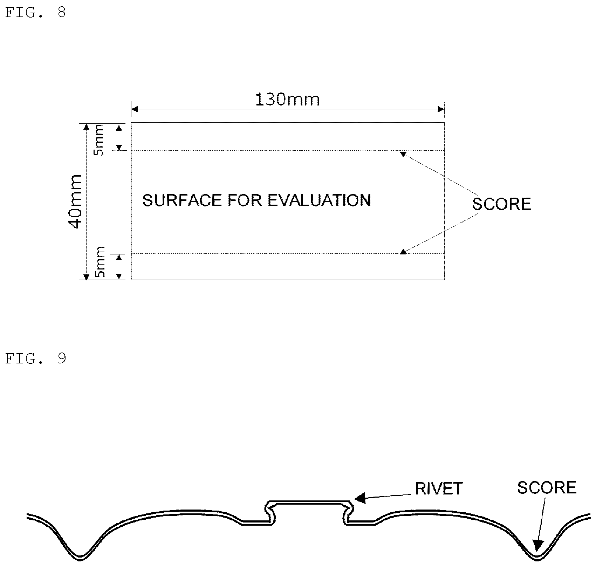

FIG. 8 is a view schematically depicting a specimen for use in openability evaluation.
[FIG. 9]
FIG. 9 is a view schematically depicting a specimen for use in corrosion resistance evaluation after can lid processing.

[Description of Embodiments]

Descriptions will hereinafter be made regarding an embodiment of a resin-coated aluminum can lid of this disclosure with use of the drawings. In this disclosure, a "color tone" should include a color difference ($\Delta E$) and lightness (L*

value) to be described later.

<Resin-coated Aluminum Can Lid 100>

FIG. 1 is a plan view schematically depicting a resin-coated aluminum can lid 100 in this embodiment. FIG. 2 is a view schematically depicting an A-A cross-section in FIG. 1. As depicted in the figures, the resin-coated aluminum can lid 100 is an easy-open can lid of the stay-on type in which, by pulling up a trailing end portion of a tab secured to a top of the can lid at a position on an outer side of an opening piece, a leading end portion of the tab is strongly pressed onto an upper surface of the opening piece, a score line surrounding the opening piece is caused to tear, and the opening piece is then pressed into a can body.

As depicted in FIG. 1 and FIG. 2, the resin-coated aluminum can lid 100 includes a central panel portion 4, a reinforcement annular groove 5, and an outermost peripheral seam portion. In the central panel portion 4, there is a to-be-opened portion 7 surrounded by a score 6, and an opening tab 8 is secured to the to-be-opened portion 7 via a rivet 9. The opening tab 8 includes a holding ring 11, a pressing tip 12, and a rivet-fixing tongue 13, and is attached to the to-be-opened portion 7 in such a manner that the pressing tip 12 overlaps the to-be-opened portion 7.

As depicted in FIG. 2, the reinforcement annular groove 5 is formed of an inner wall portion 14, a radius portion 15, and an outer wall portion (chuck wall) 16. The outer wall portion 16 is connected to a seaming panel portion 17 and a curl portion 18. Back sides of the seaming panel portion 17 and the curl portion 18 define a groove 19. This groove 19 is lined with a sealing rubber composition (not depicted), and sealing by double seaming will be conducted with a can barrel flange (not depicted). However, the shape of the resin-coated aluminum can lid 100 of this embodiment is not limited to the shape depicted in FIG. 1, and can be a known shape of a can lid to be applied to beverage cans and food cans. Described specifically, a can lid of what is generally called a full-open type, a can lid of a type that the can lid is seamed on a can barrel and is opened by a can opener, and a bottom lid for a three-piece can, and the like are also included.

FIG. 3 depicts cross-sectional enlarged views of a portion B in FIG. 2. As depicted in FIG. 3, the resin-coated aluminum can lid 100 includes an aluminum base material 10, a surface treatment layer 20 formed on at least one side of the aluminum base material 10, and a resin layer 30 formed on the surface treatment layer 20.

It is to be noted that, in FIG. 3(A), the resin-coated aluminum can lid 100 has the surface treatment layer 20 and the resin layer 30 on a side of an outer surface of the can lid, although the present invention is not limited to this. Described specifically, the resin-coated aluminum can lid 100 may include the surface treatment layer 20 and the resin layer 30 on a side of an inner surface of the can lid (not depicted). As a further alternative, this embodiment as depicted in FIG. 3(B) may also include the surface treatment layer 20 and the resin layer 30 in this order from the aluminum base material 10 on both the inner surface side and the outer surface side. It is to be noted that, in a case where the resin layer 30 is included on both the sides as in FIG. 3(B), the resin layer on the side of the inner surface of the can lid and that on the side of the outer surface of the can lid may be the same or different in kind and thickness.

<Aluminum Base Material 10>

In the resin-coated aluminum can lid 100, a pure aluminum sheet or an aluminum alloy sheet can be used as the aluminum base material 10. In general, the thickness of the aluminum base material 10 is preferably 0.10 to 1.00 mm and particularly preferably 0.15 to 0.40 mm. It is to be noted that the alloy type of the aluminum base material 10 is selected according to the application. For example, a 5000 series or 3000 series aluminum alloy sheet of the Japanese Industrial Standards (JIS) is used from the viewpoints of processability, strength, and corrosion resistance.

<Surface Treatment Layer 20>

The surface treatment layer 20 contains aluminum hydroxide. Aluminum hydroxide includes alumina monohydrate ($AlO(OH)$), alumina trihydrate ($Al(OH)_3$), and the like. By the inclusion of these substances, corrosion resistance and resin adhesiveness can be improved. Aluminum hydroxide in the surface treatment layer 20 can be identified by a peak that appears in a wavenumber range of 1000 to 1200 cm$^{-1}$ (more specifically, a peak around 1070 cm$^{-1}$) in an infrared absorption spectrum measured by an FT-IR. This peak that appears in the wavenumber range of 1000 to 1200 cm$^{-1}$ is known to be an absorbance peak associated with Al-OH bending vibrations originated from aluminum hydroxide.

In the surface treatment layer 20, amorphous alumina ($Al_2O_3$) can also be contained. The amorphous alumina in the surface treatment layer 20 can be identified by a peak that appears in a wavenumber range of 850 to 1000 cm$^{-1}$ (more specifically, a peak around 950 cm$^{-1}$) in the infrared absorption spectrum measured by an FT-IR. This peak that appears in the wavenumber range of 850 to 1000 cm$^{-1}$ is known to be an absorbance peak originated from Al-OH stretching vibrations of amorphous alumina.

It is to be noted that, more specifically, the above-mentioned infrared absorption spectrum measured by an FT-IR can be measured by a high-sensitivity reflection method (reflection absorption spectroscopy (RAS) method) using a known FT-IR.

As a measurement method of the absorbance peaks, an absorbance at a wavenumber of 1200 cm$^{-1}$ and an absorbance at a wavenumber of 850 cm$^{-1}$ in the infrared absorption spectrum are first connected with a straight line, and the straight line is used as a baseline. As the peak originated from Al-O stretching vibrations of amorphous alumina, the highest point from the baseline in the wavenumber range of 850 to 1000 cm$^{-1}$ (around 950 cm$^{-1}$) is then designated as an absorbance peak height Pa. On the other hand, as the peak originated from Al-OH bending vibrations of aluminum hydroxide, the highest point from the baseline in the wavenumber range of 1000 to 1200 cm$^{-1}$ (around 1070 cm$^{-1}$) is designated as an absorbance peak height Pb. A peak ratio "Pa/Pb" is calculated from the values thus obtained.

As described above, the resin-coated aluminum can lid 100 of this embodiment is characterized in that the peak ratio "Pa/Pb" value is 0.14 to 3.50 when, in an infrared absorption spectrum of the surface treatment layer 20 measured by an FT-IR, the height of an absorbance peak originated from amorphous alumina at wavenumbers of 850 to 1000 cm$^{-1}$ is defined as "Pa" and the height of an absorbance peak originated from aluminum hydroxide at wavenumbers of 1000 to 1200 cm$^{-1}$ is defined as "Pb."

This is for the following reason.

In the infrared absorption spectrum measured by an FT-IR, the absorbance of the surface treatment layer is considered to be in a proportional relation with the amount of chemical species existing in the surface treatment layer and having infrared activity. Accordingly, the value of the peak ratio "Pa/Pb" of the height "Pa" of the absorbance peak originated from amorphous alumina to the height "Pb" of the absorbance peak originated from aluminum hydroxide serves as a scale representing the amount ratio of amorphous alumina to aluminum hydroxide. It is hence indicated that the greater this value, the abundance ratio of amorphous alumina is greater/the abundance ratio of aluminum hydroxide is smaller and that, conversely, the smaller this value, the abundance ratio of amorphous alumina is smaller/the abundance ratio of aluminum hydroxide is greater.

It is for the following reasons that the inventors placed a focus on the peak value "Pa/Pb," in other words, the abundance ratio of amorphous alumina to aluminum hydroxide, in the surface treatment layer 20 in order to obtain the resin-coated aluminum can lid as intended.

First, a description will be made from the viewpoint of resin adhesiveness. If an aluminum hydroxide film is formed on an aluminum base material by a method to be described later, as the growth of acicular texture of boehmite or the like proceeds, the resulting film changes from a film composed primarily of amorphous, and the abundance ratio of aluminum hydroxide in the film increases. If the growth of this acicular texture is insufficient, it becomes difficult to exhibit an anchoring effect to a resin layer such as a coating film or a thermoplastic resin film. The present inventors therefore considered that, from the viewpoint of resin adhesiveness, there is a need to control the extent of the growth of the acicular texture, and proceeded with an extensive study. As a result, it has been found that the setting of the peak ratio "Pa/Pb" to 3.50 or smaller can realize a state in which the acicular texture has grown sufficiently and good resin adhesiveness is obtained.

A description will next be made from the viewpoint of corrosion resistance. Amorphous alumina (Al$_2$O$_3$) is contained in a film of aluminum hydroxide such as boehmite, depending on the formation and treatment conditions for the film. Unlike sparingly soluble aluminum hydroxide, however, amorphous alumina is water-soluble and therefore may be dissolved if it comes into contact with acidic contents or the like.

If water-soluble amorphous alumina is contained in a high proportion in the aluminum hydroxide film existing between the aluminum base material and the resin layer, the insoluble or sparingly soluble property of the film is hence considered unable to be retained. Thus, in a case where a defect occurs in the resin layer for some reason and the contents and the aluminum hydroxide film come into contact with each other, a portion of the film is dissolved, so that corrosion under the resin layer, which is called "under-film corrosion (UFC)," is prone to occur, and sufficient corrosion resistance is difficult to be obtained. Hence, believing that, for obtaining corrosion resistance, there is a need to control the proportion of amorphous alumina in the film, the inventors proceeded with an extensive study. As a result, it was found possible to retain the insoluble or sparingly soluble property of the film against the contents and hence obtain sufficient corrosion resistance by setting the peak ratio "Pa/Pb" to 3.50 or smaller.

Next, a description will be made from the viewpoint of the color tone. It was found that, when an aluminum hydroxide film is formed on an aluminum base material, light becomes more prone to scatter by the roughness of the film as the growth of the acicular texture of boehmite or the like proceeds and if the acicular texture grows excessively, the color tone gradually changes from a silver white color to a white shade by scattering of light, reducing a metallic luster sensation as well. The present inventors therefore considered that, for suppression of the changes in color tone caused by the formation of the film, there is a need to control the extent of the growth of the acicular texture, and proceeded with an extensive study. As a result, it has been found that the setting of the peak ratio "Pa/Pb" to 0.14 or greater can realize a state in which the acicular texture has grown to a moderate extent and a good color tone is available.

From the foregoing, it is important in this invention that the peak ratio "Pa/Pb" of the above-described surface treatment layer (aluminum hydroxide film) is in the range of 0.14 to 3.50. This makes it possible to obtain a resin-coated aluminum can lid having resin adhesiveness, corrosion resistance, and a color tone in combination as required.

In the surface treatment layer in this invention, the value of the above-mentioned peak ratio "Pa/Pb" is desirably in a range of 0.14 to 3.50, preferably 0.15 to 3.30, more preferably 0.20 to 3.00, still more preferably 0.30 to 2.50, and particularly preferably 0.40 to 2.30. If the value of the peak ratio "Pa/Pb" is greater than the above-described range, the resin adhesiveness and corrosion resistance deteriorate for the reason mentioned above. If the value of the peak ratio "Pa/Pb" is smaller than the above-described range, on the other hand, the color tone deteriorates for the reason mentioned above. Further, the film is inferred to become prone to undergo a cohesive failure upon processing because the acicular texture is in an excessively grown state. As a consequence, fractures (interstices) occur in the film of the processed portion, and the content liquid penetrates there, so that UFC is prone to occur, leading to a deterioration in corrosion resistance. Furthermore, depending on the kind of the resin layer, resin adhesiveness may decrease as the film becomes more prone to a cohesive failure.

In this embodiment, the thickness (film thickness) of the surface treatment layer 20 is preferably 2 nm or greater from the viewpoint of the resin adhesiveness of the resin-coated aluminum can lid 100. On the other hand, the upper limit of the thickness of the surface treatment layer 20 is preferably smaller than 100 nm from the viewpoint of the color tone and corrosion resistance. The optimal thickness of the surface treatment layer 20 depends on the intended can lid shape or the like, and is more preferably 5 nm or greater but smaller than 70 nm, still more preferably 6 to 60 nm, particularly preferably 7 to 50 nm, and most preferably 8 to 35 nm. If the film thickness is greater than the above-described range, the color tone and corrosion resistance may deteriorate, but if smaller, the resin adhesiveness and corrosion resistance may deteriorate.

It is to be noted that, in this embodiment, as a measuring method for the thickness of the surface treatment layer 20, a method using time-of-flight secondary ion mass spectroscopy (TOF-SIMS) can be applied, for example.

TOF-SIMS is a method that performs a mass analysis by irradiating a solid specimen at a surface thereof with a primary ion beam from a primary ion gun and mass-separating secondary ions, which are released by sputtering from the surface of the specimen, with use of their flight time differences (the time of flight is proportional to the square root of the mass).

Here, the concentration distribution of an element, which is to be detected, in a depth direction of the surface of the specimen can be found by detecting the intensity of secondary ions while allowing sputtering to proceed and, with respect to time course data of the ion intensity of secondary ions, specifically, ions of an element to be detected or molecule ions connected to the element to be detected, converting course times into depths.

In this disclosure, etching is conducted using TOF-SIMS from the side of the surface of the surface treatment layer 20 (from the side of the surface opposite to the aluminum base material) until the aluminum base material is reached, and the depth at which the intensity of secondary ions of metal aluminum originated from the aluminum base material became a half of the maximum intensity (the intensity of secondary ions of metal aluminum when the aluminum base material is reached) is defined as the film thickness of the surface treatment layer. It is to be noted that the depth at that time is an $Al_2O_3$ equivalent depth.

The surface treatment layer 20 in this embodiment contains alumina monohydrate and alumina trihydrate as aluminum hydroxide as mentioned above. In addition, aluminum oxide ($Al_2O_3$) may also be contained as a compound other than those mentioned above. The surface treatment layer 20 in this embodiment may also contain extremely trace compounds that are present in a treatment solution, for example, silicon dioxide ($SiO_2$), magnesium oxide (MgO), manganese oxide (MnO), iron oxide (FeO), calcium oxide (CaO), phosphoric acid, and the like, to extents not impairing the performance.

<Resin Layer 30>

The resin layer 30 is directly or indirectly formed on the surface treatment layer 20 and on a side opposite to the aluminum base material 10. It is to be noted that, in this embodiment, a known adhesive layer (adhesion primer layer) or the like may exist between the surface treatment layer 20 and the resin layer 30.

As the material of the resin layer 30 in this embodiment, a known coating film or thermoplastic resin film that is coated to metal base materials can be applied.

<Resin Layer (Coating Film)>

As the above-described coating film, it is possible to mention a coating film formed from a coating formulation containing a thermoplastic resin, for example, an amino resin such as a urea resin, a melamine resin, or a benzoguanamine resin, a phenolic resin, a furan resin, a xylene resin, a ketone resin, an alkyd resin, an unsaturated polyester resin, an epoxy resin, an epoxy-acrylic resin, an epoxy-phenol resin, a bismaleimide resin, a triallyl cyanurate resin, a thermosetting acrylic resin, a silicone resin, or an oilbased resin, or a thermoplastic resin, for example, a vinyl chloride organosol, a vinyl chloride-vinyl acetate copolymer, a partial saponification product of a vinyl chloride-vinyl acetate copolymer, a vinyl chloride-maleic acid copolymer, a vinyl chloride-maleic acid-vinyl acetate copolymer, an acrylic resin, a polyester resin (saturated polyester resin), a polyolefin resin, or the like. As an ingredient of the coating formulation, one of these kinds of resins is used singly, or a combination of two or more kinds of them is also used. Among these resins, the above-mentioned amino resin, phenolic resin, epoxy resin, epoxy-acrylic resin, epoxy-phenol resin, vinyl chloride organosol, acrylic resin, saturated polyester resin, or polyolefin resin is desired. A coating film formed from a coating formulation containing one or two or more kinds of these resins, specifically, an epoxy-based coating film, an epoxy acrylic-based coating film, an epoxy phenol-based coating film, an epoxy urea-based coating film, a polyester phenol-based coating film, a polyester amino-based coating film, a vinyl chloride organosol-based coating film, or a polyolefin-based coating film, is more suited, and an epoxy acrylic-based coating film, a polyester phenol-based coating film, a polyester amino-based coating film, or a vinyl chloride organosol-based coating film is still more suited. Further, as the inner surface coating film formed on the side of the inner surface of the can lid, an epoxy acrylic-based coating film, an epoxy phenol-based coating film, an epoxy urea-based coating film, a polyester phenol-based coating film, a polyester amino-based coating film, a vinyl chloride organosol-based coating film, or a polyolefin-based coating film is suited, and an epoxy acrylic-based coating film, an epoxy phenol-based coating film, a polyester phenol-based coating film, or a vinyl chloride organosol-based coating film is more suited. As the outer surface coating film formed on the side of the outer surface of the can lid, an epoxy acrylic-based coating film, an epoxy urea-based coating film, a polyester amino-based coating film, or a polyolefin-based coating film is suited, and an epoxy acrylic-based coating film or a polyester amino-based coating film is more suited.

The coating formulation for forming the above-described coating film can also be prepared into either a water-based coating formulation with coating ingredients dissolved in an aqueous solvent or a solvent-based coating formulation with coating ingredients dissolved in an organic solvent.

<Resin Layer (Thermoplastic Resin Film)>

As a thermoplastic resin constituting the thermoplastic resin film described above, one or more kinds of resins including a polyolefin resin, a polyester resin, a polycarbonate resin, an acrylic resin, a polystyrene resin, an acrylonitrile-butadiene-styrene (ABS) resin, a polyamide resin, a fluorinated resin, a polyvinyl chloride resin, and the like can preferably be applied.

Among the above-mentioned thermoplastic resins, a polyolefin resin or a polyester resin and a blend of them can be applied more preferably. As the polyolefin resin, one or more kinds of resins including a polyethylene resin, a polypropylene resin, an ethylene-propylene copolymer resin, a polyolefin resin modified with unsaturated carboxylic acid such as an ethylene-acrylic acid ester copolymer resin, and an ethylene-methacrylic acid ester copolymer resin, and an ethylene-methacrylic acid copolymer resin, an ionomer resin, and the like can preferably be applied, for example. As the polyester resin, a polyester resin composed primarily of ethylene terephthalate units is preferred, for example. Specifically, the polyester resin may be a polyethylene terephthalate resin, and may also be a pure copolymer polyester resin which contains an acid component other than terephthalic acid in a proportion of 35 mol% or smaller based on the acid component and an alcohol component other than ethylene glycol in a proportion of 35 mol% or smaller based on the alcohol component, or a blend thereof. As the acid component other than terephthalic acid, isophthalic acid, naphthalenedicarboxylic acid, cyclohexanedicarboxylic acid, P-$\beta$-oxyethoxybenzoic acid, diphenoxyethane-4,4'-dicarboxylic acid, 5-sodium sulfoisophthalic acid, hexahydroterephthalic acid, succinic acid, adipic acid, sebacic acid, dodecanedioic acid, dimer acid, trimellitic acid, pyromellitic acid, and the like can be mentioned. As the alcohol component other than ethylene glycol, on the other hand, a glycol component such as propylene glycol, 1,4-butanediol, neopentyl glycol, 1,6-hexylene glycol, diethylene glycol, triethylene glycol, cyclohexanedimethanol, ethylene oxide adduct of bisphenol A, trimethylolpropane, or pentaerythritol can be mentioned. As a polyester resin other than those composed primarily of ethylene terephthalate units, examples may include a polyester resin composed primarily of butylene terephthalate units or a polyester resin composed primarily of ethylene naphthalate units and a blend of these polyester resins.

As the resin layer 30, a polyester resin can be applied more preferably, and one or more kinds of crystalline polyester resins including a polyethylene terephthalate resin, a polybutylene terephthalate resin, a polyethylene terephthalate resin with isophthalic acid copolymerized therewith, and a polybutylene terephthalate resin with isophthalic acid copolymerized therewith can particularly preferably be applied, with the polyethylene terephthalate resin with isophthalic acid copolymerized therewith being most preferred. More specifically, the resin layer 30 is desirably a crystalline polyester resin that contains 2 to 25 mol% of isophthalic acid and that is composed primarily of ethylene terephthalate units.

The resin layer 30 may be a multilayer resin layer. For example, a polyester resin layer of two or more layers in which isophthalic acid has been copolymerized at different ratios or the like can be used. More specifically, the resin layer 30 may include a bottom layer, in which a relatively large amount of isophthalic acid has been copolymerized, and a surface layer, in which a relatively small amount of isophthalic acid has been copolymerized. More specifically, the bottom layer can be a polyester resin that contains 1 to 20 mol% of isophthalic acid and that is composed primarily of ethylene terephthalate units, and the surface layer can be a polyethylene terephthalate resin, or a polyester resin that contains isophthalic acid in a proportion of 15 mol% or smaller, preferably isophthalic acid in a proportion of 1 to 10 mol%, and that is composed primarily of ethylene terephthalate units. It is to be noted that, in this case, the bottom layer is a layer closer to the aluminum base material 10 and the surface layer is a layer relatively farthest from the aluminum base material 10 compared with the bottom layer. Further, in this case, the thickness ratio (layer ratio) of the surface layer to the bottom layer is preferably in a range of surface layer:bottom layer = 20:1 to 1:20 and more preferably in a range of surface layer:bottom layer = 10:1 to 1:10.

Further, the resin layer 30 may also be a resin layer in which a plurality of different resins has been blended. For example, a resin layer in which an ionomer resin, an ethylene-propylene copolymer resin, or a polyolefin resin modified with unsaturated carboxylic acid has been blended with a polyethylene terephthalate resin, a resin layer in which a polyethylene terephthalate resin or a polyethylene terephthalate resin copolymerized with isophthalic acid and a polybutylene terephthalate resin have been blended, or the like can also be applied. In the case of the resin in which the polyethylene terephthalate resin or the polyethylene terephthalate resin copolymerized with isophthalic acid and the polybutylene terephthalate resin have been blended, preferred is one in which the polybutylene terephthalate resin has been blended in a range of 10% to 50% with the polyethylene terephthalate resin or the polyethylene terephthalate resin copolymerized with isophthalic acid.

A thermoplastic resin such as the above-described crystalline polyester resin may be one to be laminated onto the aluminum base material after formation of a film, or may be one to be subjected to direct lamination that extrudes the heated and melted thermoplastic resin into a film form through a slit, which has a narrow extrusion width, of an extruder and then directly laminates it onto the aluminum base material. If the above-described film is laminated after its formation, the above-described film is not particularly limited to any kind, and may be, for example, an unstretched film, a uniaxially stretched film, or a biaxially stretched film.

To the resin layer 30, known resin additives, for example, an antiblocking agent such as amorphous silica, an inorganic filler such as calcium carbonate, magnesium carbonate, talc, or glass, a variety of fibers such as glass fibers, carbon fibers, or aramid fibers, an antistatic agent, an antioxidant such as tocopherol, an ultraviolet absorber, and the like can be added according to known methods.

Further, the resin layer 30 made of the thermoplastic resin film may be one formed on the surface treatment layer 20 via a conventionally known adhesion primer layer such as a layer of an epoxy phenol type or a layer of a polyester phenol type. The adhesion primer layer exhibits excellent adhesiveness to both the surface treatment layer and the resin layer. From the viewpoint of adhesiveness and corrosion resistance, the adhesion primer of the epoxy phenol type is preferably formed from a coating formulation particularly containing an epoxy resin and a phenolic resin at a weight ratio of 50:50 to 99:1, especially a weight ratio of 60:40 to 95:5. From the viewpoint of adhesiveness and corrosion resistance, the adhesion primer of the polyester phenolic type is preferably formed from a coating formulation particularly containing a polyester resin and a phenolic resin at a weight ratio of 50:50 to 99:1, especially a weight ratio of 60:40 to 95:5. In general, the above-described adhesion primer layer may be arranged with a thickness of 0.1 to 10 $\mu$m, preferably 0.3 to 3 $\mu$m.

If the resin layer 30 is a crystalline resin such as polyethylene terephthalate, it is preferred, but not essential, to contain oriented crystals thereinside, from the viewpoint of openability and the like.

The thickness of the resin layer 30 is not limited to any particular thickness, and can be set to a thickness similar to that of known can lids. More specifically, the thickness of the resin layer 30 is preferably in a range of 0.5 to 200 $\mu$m, more preferably in a range of 1 to 40 $\mu$m, and still more preferably in a range of 2 to 20 $\mu$m. Further, if the resin layer 30 is a coating film, the upper limit of the thickness is particularly preferably 15 $\mu$m. In addition, if the resin layer 30 is a coating film, the coating film amount is preferably in a range of 10 to 200 $mg/dm^2$ and more preferably in a range of 30 to 150 $mg/dm^2$.

In this disclosure, the resin-coated aluminum can lid 100 preferably has a lightness L* value of 85.5 or greater on the side of the outer surface. Further, in this disclosure, the lightness L* value can be measured using a spectrophotometer in accordance with JIS Z 8781-4:2013. It is to be noted that, in this disclosure, if the resin layer itself of the outer surface of the can lid is colored or has low transparency, the lightness L* value of the outer surface of the can lid is desirably measured in a state in which the outer surface has only the aluminum base material and the surface treatment layer after the resin layer 30 has been removed by a known method.

The lightness L* value of the outer surface of the can lid is preferably 85.5 or greater, more preferably 86 or greater, and still more preferably in a range of 87 to 92.

On the other hand, the lightness L* value of the outer surface of the can lid when measured in the state in which the outer surface has only the aluminum base material and surface treatment layer after the resin layer 30 has been removed by the known method is preferably 86 or greater, more preferably 87 or greater, and still more preferably in a range of 88 to 93.

There are no particular limitations on chromaticity a* and chromaticity b* of the resin-coated aluminum can lid 100 on the outer surface of the can lid.

In this disclosure, the resin-coated aluminum can lid 100, on the side of the outer surface, has a color difference ($\Delta E$) of preferably smaller than 3 and more preferably smaller than 2 from a reference can lid free of the surface treatment layer 20.

The color difference ($\Delta E$) is an index expressed using the L*a*b* color system specified in JIS Z 8730:2009, and is an index calculated by the following formula based on the difference in the International Commission on Illumination (CIE) lightness L* and the difference in the chromaticity a* and the chromaticity b* between two object colors. Lightness, chromaticity, and the color difference can be measured using a colorimeter or the like.

An example of a specific calculation method of the color difference (ΔE) in this embodiment is as will be described below. The resin-coated aluminum can lid 100 is cut off, and lightness (L* value) and chromaticity (a* value and b* value) on the side of the outer surface are measured. In addition, on a can lid (reference sample) that has been manufactured similarly but does not have the surface treatment layer 20, lightness (L* value) and chromaticity (a* value and b* value) are similarly measured. Using the following formula (1), the color difference (ΔE) between the resin-coated aluminum can lid 100 and the reference sample is then calculated.

$$\Delta E = ((\Delta L^{*})^{2} + (\Delta a^{*})^{2} + (\Delta b^{*})^{2})^{1/2} \dots (1)$$

$$\Delta L^{*} = L^{*}_{1} - L^{*}_{0}, \quad \Delta a^{*} = a^{*}_{1} - a^{*}_{0}, \quad \Delta b^{*} = b^{*}_{1} - b^{*}_{0}$$

$\Delta L^{*}$: change in L* value, $L^{*}_{0}$: L* value of the reference sample, $L^{*}_{1}$: L* value of this embodiment
$\Delta a^{*}$: change in a* value, $a^{*}_{0}$: a* value of the reference sample, $a^{*}_{1}$: a* value of this embodiment
$\Delta b^{*}$: change in b* value, $b^{*}_{0}$: b* value of the reference sample, $b^{*}_{1}$: b* value of this embodiment

In this disclosure, the resin-coated aluminum can lid 100 preferably has a specular glossiness of 85 or greater in terms of 60° gloss value in accordance with JIS Z 8741:1997, with 90 or greater being more preferred. If the specular glossiness is 85 or greater in terms of 60° gloss value, a metallic luster sensation specific to the aluminum base material is felt, and at the same time, dullness and whitishness are suppressed, so that a lid of a preferred appearance can be provided. It is to be noted that the specular glossiness in this disclosure is measured in accordance with the measuring method specified in JIS Z 8741:1997.

<Manufacturing Method of Resin-coated Aluminum Can Lid>

A description will hereinafter be made regarding a manufacturing method of the resin-coated aluminum can lid 100. It is to be noted that the manufacturing method described here in this embodiment is merely one example and shall not be limited to this method.
The manufacturing method of the resin-coated aluminum can lid 100 includes at least (i) a manufacturing step of a resin-coated aluminum sheet and (ii) a lid manufacturing step of forming the obtained resin-coated aluminum sheet into a can lid.
Concerning (ii) the manufacturing step of the can lid will hereinafter be described in detail. It is to be noted that (i) the manufacturing step of the resin-coated aluminum sheet will be described subsequently herein. As a forming method applied in the lid manufacturing step, a known forming method such as a press molding method can be applied. First, the resin-coated aluminum sheet or a coil is punched into predetermined shapes and dimensions. Subsequently, or at the same time, the resin-coated aluminum sheet or the coil is formed into a lid by press molds. In general, this method is applied to an easy-open can lid of the stay-on type or an easy-open can lid of a full-open type.

<Resin-coated Aluminum Sheet>

A description will hereinafter be made regarding a resin-coated aluminum sheet 300 usable for the manufacture of the resin-coated aluminum can lid 100. FIG. 4 depicts views schematically depicting the resin-coated aluminum sheet 300 according to this embodiment. As depicted in FIG. 4, the resin-coated aluminum sheet 300 includes an aluminum base material 10', a surface treatment layer 20' formed on at least one side of the aluminum base material 10', and a resin layer 30' formed on the surface treatment layer 20'. The resin-coated aluminum sheet 300 depicted in FIG. 4(a) has the surface treatment layer 20' and the resin layer 30' on one side thereof, but this disclosure is not limited thereto, and as depicted in FIG. 3(b), the resin-coated aluminum sheet may be a resin-coated aluminum sheet 310 having the surface treatment layer 20' and the resin layer 30' on both sides of the aluminum base material 10'. The aluminum base material 10', the surface treatment layer 20', and the resin layer 30' correspond to the aluminum base material 10, the surface treatment layer 20, and the resin layer 30, respectively, included in the above-described resin-coated aluminum can lid 100. Therefore, only the differences will hereinafter be described, and a description of the common configurations is omitted.
In this embodiment, the thickness of the surface treatment layer 20' is preferably 2 nm or greater from the viewpoint of resin adhesiveness. On the other hand, the upper limit of the thickness of the surface treatment layer 20' is preferably smaller than 100 nm from the viewpoint of the color tone and corrosion resistance. The optimal thickness of the surface treatment layer 20' depends on the intended can lid shape or the like, and is more preferably 5 nm or greater but smaller than 70 nm, still more preferably 6 to 60 nm, particularly preferably 7 to 50 nm, and most preferably 8 to 35 nm.
On the other hand, the thickness of the resin layer 30' is not limited to any particular thickness in this embodiment, but is preferably in a range of 0.5 to 200 μm, more preferably in a range of 1 to 40 μm, and still more preferably in a range of 2 to 20 μm. Further, if the resin layer 30' is a coating film, the upper limit of the thickness of the resin layer 30 is particularly preferably 15 μm. Moreover, if the resin layer 30' is a coating film, the coating film amount is preferably in a range of 10 to 200 mg/dm$^2$ and more preferably in a range of 30 to 150 mg/dm$^2$. In general, the thicker the resin layer is, the higher the corrosion resistance is, but resin adhesiveness and the like may decrease, so that there is an optimal thickness range according to the application.

It is to be noted that the above-mentioned Pa/Pb ratio does not change by processing of forming a can lid. Therefore, the Pa/Pb ratio of the surface treatment layer 20' in the resin-coated aluminum sheet 300 is characterized to be 0.14 to 3.50, as with the resin-coated aluminum can lid 100.

<Manufacturing Method of Resin-coated Aluminum Sheet>

Next, a description will hereinafter be made regarding a manufacturing method of the resin-coated aluminum sheet 300 ((i) the manufacturing step of the resin-coated aluminum sheet, which has been mentioned above) in this embodiment. It is to be noted that the manufacturing method presented here in this embodiment is merely an illustrative one and that the manufacturing method shall not be limited to this method.

The manufacturing method of the resin-coated aluminum sheet in this embodiment includes a surface treatment step of forming, on the aluminum base material 10', the surface treatment layer 20' that contains aluminum hydroxide and a resin coating step of forming the resin layer 30'. It is to be noted that the surface treatment step forms the surface treatment layer 20' such that the value of Pa/Pb is 0.14 to 3.50 when, in an infrared absorption spectrum measured by an FT-IR, the height of an absorbance peak at wavenumbers of 850 to 1000 cm$^{-1}$ originated primarily from Al-O stretching vibrations of amorphous alumina is defined as Pa and the height of an absorbance peak at wavenumbers of 1000 to 1200 cm$^{-1}$ originated primarily from Al-OH bending vibrations of aluminum hydroxide is defined as Pb.

There is no particular limitation on the surface treatment step if it is a step capable of setting the value of the above-described peak ratio Pa/Pb to 0.14 to 3.50. Examples include a method that immerses the aluminum base material 10' in a solution (treatment agent) of which the pH is 6 to 13 at 20°C to 100°C and keeps it in contact with the solution for 0.1 to 30 seconds, a method that brings the aluminum base material 10' into contact with steam (treatment agent) of 100°C to 140°C and keeps it in the steam for 0.1 to 120 seconds, and the like.

That is, as a treatment agent for the above-described surface treatment, the solution of 20°C to 100°C, steam of 100°C to 140°C, or the like can be used. As the temperature of the treatment agent is higher, the surface treatment layer 20' can be formed in a shorter period of time.

When the aluminum base material 10' is treated by being immersed in the solution (treatment agent), a solution of which the pH is in a range of 6 to 13 as the pH of the treatment agent can be applied. Substantially no aluminum hydroxide is formed in an acidic solution of less than pH 6, and stable formation of the film is possible in water of pH 7 or higher or an alkali solution of pH 8 to pH 13.

The reason that an alkali is used in the surface treatment solution is to dissolve a naturally formed oxide film, which exists on the surfaces of the aluminum base material before the treatment, in an extremely short period of time. In general, a native oxide film on an aluminum base material is a film made primarily of aluminum oxide, and can be dissolved in an extremely short period of time in an alkali solution. However, as the pH of the solution becomes higher, the proportion of amorphous alumina in the surface treatment layer 20' increases. A more preferred pH range is therefore pH 8 to pH 10.

As the surface treatment solution for use in the above-described surface treatment step, pure water can preferably be used. Deionized water having an electrical conductivity of 10 μS/cm or lower may also be used. The reason that pure water or deionized water is preferred is that the higher the phosphorus concentration, calcium concentration, silicon concentration, magnesium concentration, and iron concentration in the surface treatment solution are, the higher the proportion of amorphous alumina to be contained in the surface treatment layer 20' becomes. If any one of the phosphorus concentration, calcium concentration, silicon concentration, magnesium concentration, and iron concentration exceeds 1 ppm, the proportion of amorphous alumina to be contained in the surface treatment layer 20' abruptly increases. It is hence preferred to control the concentrations of these elements to 1 ppm or lower, with 0.1 ppm or lower being more preferred.

If the surface treatment solution for use in the above-described surface treatment step is alkaline (pH 8 to pH 13), an aqueous sodium carbonate solution, an aqueous sodium aluminate solution, an aqueous sodium hydroxide solution, an aqueous potassium hydroxide solution, or the like is preferably used. It is to be noted that, as water for use in the alkali solution, the above-mentioned pure water or deionized water is preferred.

As a specific example in the case that uses gas as the treatment agent, steam or superheated steam can be applied. In this case, the temperature of steam is preferably 100°C to 140°C. On the other hand, the temperature of superheated steam is preferably 120°C to 350°C. As the temperature is higher, the surface treatment layer 20' can be formed according to the application by treatment in a shorter period of time. In the case of superheated steam, there is a need for a process that dries the aluminum base material 10' in a superheated steam oven by feeding the aluminum base material 10' in a state in which the surface of the aluminum base material 10' becomes wet by condensation at the surfaces thereof at the moment of being fed into the superheated steam oven or the aluminum base material 10' is fed in a pre-wetted state, because the film that contains aluminum hydroxide is swiftly formed at a timing when water on the surfaces of the aluminum base material vaporizes.

In the manufacturing method in this embodiment, a pre-treatment step may be included before the above-described surface treatment step. The pre-treatment step is conducted as a step that removes the native oxide film existing on the surfaces of the aluminum base material 10'. Specifically, as the pre-treatment step, immersion treatment or cathodic electrolytic treatment can be conducted using an alkali solution. Here, as specific examples of immersion treatment conditions, it is possible to set the alkali solution to pH 8 to pH 13, the solution temperature to 20°C to 90°C, and the immersion time to 0.1 to 10 seconds. As specific examples of cathodic electrolytic treatment conditions, on the other hand, it is possible to set the alkali solution to pH 8 to pH 13, the solution temperature to 20°C to 90°C, the cathodic electrolysis time to 0.1 to 10 seconds, and the current density to 1 to 10 A/dm$^2$. By the above-described pre-treatment, the native oxide film existing on the surfaces of the aluminum base material is removed, and at the same time, localized dissolution of the aluminum base material is suppressed, so that a more homogeneous surface treatment layer 20' can be formed with aluminum hydroxide contained therein. Especially from the viewpoint of homogenization of the surface treatment layer 20', cathodic electrolytic treatment is preferred than immersion treatment because the native oxide film can more evenly be removed.

Further, known degreasing treatment may also be applied, as surface cleaning for removing rolling oil, rust preventive oil, and the like, as needed before the above-described pretreatment step. No particular limitation is imposed on a degreasing agent, and a known degreasing agent such as an organic solvent-based degreasing agent or an acidic or alkaline aqueous degreasing agent can be used.

Next, as the resin coating step, a method that forms the resin layer 30' on the surface treatment layer 20' formed as described above, for example, can be mentioned. The formation of the resin layer 30' can be conducted by a desired method. In the case of a coating film, examples include a method that applies a coating formulation by a roll coater and then dries it in an oven, a method that conducts spray coating of the coating formulation and then dries it in an oven, and the like. In the case of a thermoplastic resin film, there are a method that laminates resin which is in a molten state directly on the surface-treated aluminum sheet, a method that thermocompression-bonds resin which has been processed into the form of a film on a different line to the surface-treated aluminum sheet which has been heated on a lamination line, and the like. In addition, with a purpose of enhancing resin adhesiveness, an adhesion primer layer may be formed between the surface treatment layer 20' and the resin layer 30' as mentioned above. It is to be noted that the adhesion primer layer may be arranged beforehand on the surface treatment layer on the surface-treated aluminum sheet or may be arranged beforehand on a resin layer such as a thermoplastic resin film.

<Examples>

This disclosure will hereinafter be described more specifically by providing Examples. First, measurement methods in Examples will be described.

[Calculation of Absorbance Peak Ratio (Pa/Pb)]

The absorbance in the infrared absorption spectrum of the surface treatment layer 20 of the resin-coated aluminum can lid 100 was calculated from the surface-treated aluminum sheet with use of an FT-IR by a high-sensitivity reflection method (RAS method) under the following conditions. A gold-evaporated mirror was used as a background. Only parallel polarized light was detected using a polarizer.

Instrument: "FTIR-6600 type A" manufactured by JASCO Corporation
Measurement conditions:

Measurement method: RAS method
Accessories used: "Advanced Grazing Angle" manufactured by PIKE Technologies, Inc.
Detector: mercury cadmium telluride (MCT) detector
Wavenumber resolution: 4 cm$^{-1}$
Accumulation count: 64
Measurement temperature: room temperature
Measurement atmosphere: air
Measurement wavenumber range: 4000 to 500 cm$^{-1}$

Measurement of absorbance peaks was conducted on a surface-treated aluminum sheet manufactured by a method to be described later. First, as illustrated in FIG. 5, the absorbance at number 1200 $cm^{-1}$ and the absorbance at wavenumber 850 $cm^{-1}$ in an infrared absorption spectrum were connected by a straight line, and the straight line was used as a baseline. Then, as a peak originated from Al-O stretching vibrations of amorphous alumina, a point highest from the baseline in the range of wavenumbers 850 to 1000 $cm^{-1}$ was taken as an absorbance peak height Pa. Further, as a peak originated from Al-OH bending vibrations of aluminum hydroxide, a point highest from the baseline in the range of wavenumbers 1000 to 1200 $cm^{-1}$ was taken as an absorbance peak height Pb. The absorbance peak ratio (Pa/Pb) was calculated from the measured Pa and Pb. The absorbance peak heights Pa and Pb are presented together with the calculated absorbance peak ratio (Pa/Pb) in Table 1. It is to be noted that the absorbance peak ratio value obtained by the above-mentioned measurement method coincides with the value of an absorbance peak ratio value obtained by measurement after removing the resin layer 30 by a known method in the resin-coated aluminum can lid 100.

[Calculation of Film Thickness of Surface Treatment Layer]

Calculation of the film thickness of the surface treatment layer was conducted under the following conditions from the surface-treated aluminum sheet with use of a time-of-flight secondary ion mass spectrometer (TOF-SIMS). Mass analysis was conducted on the film constituent components while soft-etching is repeatedly conducted at a constant speed from the surface side of the surface treatment layer of the surface-treated aluminum sheet with use of a cesium (Cs) ion gun. Etching was conducted until the aluminum base material was reached, and the depth at which the secondary ion intensity of metallic aluminum derived from the aluminum base material decreased to a half of the maximum intensity (secondary ion intensity of the metallic aluminum when the soft etching reached the aluminum base material) was taken as the film thickness of the surface treatment layer. It is to be noted that the depth is the depth in terms of alumina.

Instrument: "TOF.SIMS 5" manufactured by IONTOF GmbH.
Measurement conditions:

Primary ion species: Bi
Etching gun type: Cs
Measurement area: 50 $\mu$m $\times$ 50 $\mu$m

[Coating Film Adhesiveness Evaluation (T-peel Evaluation)]

Regarding film adhesiveness in the case of coating with a coating film, an evaluation was made by the following method (T-peel evaluation) with use of a resin-coated aluminum sheet prepared by the below-mentioned method. First, two 5 mm $\times$ 100 mm pieces, each cut from the resin-coated aluminum sheet, were prepared. Those two pieces of the sheet were compression-bonded by a hot press with their coated surfaces on the sides of their inner surfaces being positioned opposing each other with a nylon film of the same width held therebetween. A base material at a position free of the film was folded 90° into a T-shape, thereby forming a specimen depicted in FIG. 6. Using a tension tester, the specimen was chucked at a portion thereof folded in the T-shape, and was pulled in the directions of arrows in the figure to measure the adhesion strength (film adhesiveness). Based on the measurement results, an evaluation was made as follows. It is to be noted that an observation was made on a surface for evaluation of the specimen after the evaluation, and the coating film was determined to have undergone interfacial separation if the coating film on the surface for evaluation was wholly peeled off from the aluminum base material. If the coating film or the nylon film remained on the surface for evaluation, on the other hand, the coating film or the nylon film was determined to have undergone a cohesive failure.

A: Strength was 17 N or higher at cohesive failure or interfacial separation
B: Lower than 17 N but 15 N or higher at interfacial separation
C: Lower than 15 N but 13 N or higher at interfacial separation
D: Lower than 13 N at interfacial separation

[Resin Adhesiveness Evaluation (180° Peel Evaluation)]

Regarding the resin adhesiveness in the case of coating with a thermoplastic resin film, an evaluation was made by the following method (180° peel evaluation) with use of a resin-coated aluminum sheet prepared by the below-mentioned method. First, a sample was cut off in a T-shape and in dimensions indicated in FIG. 7a from the resin-coated aluminum sheet, a 180° peel test depicted in FIG. 7b was conducted at a tensile speed of 20 mm/min, and adhesion strength (resin adhesiveness) per 15 mm wide was measured. Based on the measurement results, an evaluation was made as follows.

Good: Maximum tensile strength was 10 N/15 mm or higher
Bad: Maximum tensile strength was lower than 10 N/15 mm

[Openability Evaluation (Feathering Evaluation)]

Regarding openability, an evaluation was made by the below-mentioned method (feathering evaluation) with use of a resin-coated aluminum sheet prepared by the below-mentioned method. First, the resin-coated aluminum sheet was cut off in 40 mm × 130 mm, and scores were formed at positions located 5 mm from both ends to prepare such a specimen as depicted in FIG. 8. Using the specimen and a tension tester, a piece of the sample was chucked, pulling was conducted at 500 mm/min, the sample was torn along the scores, and at the coated surface (surface for evaluation) on the side that would serve as an inner surface of a lid, feathering (film peel lengths) occurred along the scores was measured. According to the type of the coating formulation on the inner surface side, an evaluation was made as follows.

In Case of Epoxy Acrylic-based Coating Formulation

A: Peel length of coating film was 0.3 mm or shorter
B: Peel length of coating film was longer than 0.3 mm but 0.4 mm or shorter
C: Peel length of coating film was longer than 0.4 mm

In Case of Polyester Phenol-based Coating Formulation

A: Peel length of coating film was 0.2 mm or shorter
B: Peel length of coating film was longer than 0.2 mm but 0.4 mm or shorter
C: Peel length of coating film was longer than 0.4 mm

In Case of Vinyl Chloride Organosol-based Coating Formulation

A: Peel length of coating film was 1.0 mm or shorter
B: Peel length of coating film was longer than 1.0 mm but 2.0 mm or shorter
C: Peel length of coating film was longer than 2.0 mm

[Corrosion Resistance Evaluation (Coated Sheet)]

Regarding the corrosion resistance of the resin-coated aluminum sheet (coated sheet), an evaluation was made by the following method with use of a resin-coated aluminum sheet prepared by the below-mentioned method. First, the resin-coated aluminum sheet was cut off in 50 mm × 50 mm, and with a coated surface on an inner-surface side directed outward (in a protruding form), a Du Pont impact (1/2 inch, 300 g, 30 cm) was directed. Next, two crosscut scratches (5 cm each) reaching a base material were formed in the specimen by a utility knife such that the protrusion vertex of a Du Pont impact area coincides with a crosspoint, and with the specimen immersed in a corrosion model solution (aqueous solution of sodium chloride and anhydrous citric acid at mass concentrations of 1.0% and 0.5%, respectively), time was allowed to pass at 37°C for two weeks. After that, the specimen was taken out of the model solution, and regarding the conditions of corrosion in the Du Pont impact area, an evaluation was made as follows.

A: No corrosion, or minor
B: Corrosion occurred locally
C: Corrosion occurred on the entire surface

[Corrosion Resistance Evaluation (Can Lid)]

Regarding corrosion resistance after can lid processing, an evaluation was made by the below-mentioned method with use of a resin-coated aluminum sheet prepared by the below-mentioned method. First, forming was conducted using a lid processing mold, and one with a rivet and a score applied to the surface of the coating film on the inner surface side was provided as a specimen (FIG. 9). With the prepared specimen immersed such that the corrosion model solution (aqueous solution of sodium chloride and anhydrous citric acid at mass concentrations of 1.0% and 0.5%, respectively) came into contact with the surface of the coating film on the inner surface side, time was allowed to pass at 37°C for two weeks. After that, the specimen was taken out of the model solution, and regarding the conditions of corrosion at the rivet portion and the score portion, an evaluation was made as follows.

In Case of Rivet Portion

A: No corrosion, or minor
B: Corrosion occurred locally
C: Corrosion occurred on the entire surface

In Case of Score Portion

Good: No occurrence of corrosion accompanied with blisters
Bad: Occurrence of corrosion accompanied with blisters

[Color Tone Evaluation]

Using a resin-coated aluminum sheet prepared by the below-mentioned method, its color tone was measured. Specifically, regarding the surface of the coating film on the outer surface side of the resin-coated aluminum sheet, lightness (L* value) and chromaticity (a* value and b* value) were first measured, and then, the color difference ($\Delta E$) from a reference sample (Comparative Example 1 or 3) was calculated using the following formula (1). It is to be noted that the calculation was conducted by selecting the reference sample according to the alloy type, because the color tone differs with the aluminum base material. As a measurement instrument, a spectrophotometer "CM-5" manufactured by Konica Minolta, Inc. was used.

$$\Delta E = ((\Delta L^*)^2 + (\Delta a^*)^2 + (\Delta b^*)^2)^{1/2} \ \ldots \ (1)$$

$$\Delta L^* = L^*_1 - L^*_0, \ \Delta a^* = a^*_1 - a^*_0, \ \Delta b^* = b^*_1 - b^*_0$$

$\Delta L^*$: change in L* value, $L^*_0$: L* value of Comparative Example 1 or 3, $L^*_1$: L* value of Example
$\Delta a^*$: change in a* value, $a^*_0$: a* value of Comparative Example 1 or 3, $a^*_1$: a* value of Example
$\Delta b^*$: change in b* value, $b^*_0$: b* value of Comparative Example 1 or 3, $b^*_1$: b* value of Example

Based on $\Delta L^*$ and $\Delta E$ thus obtained, determination was made as follows.

Good: $\Delta L^*$ was smaller than 3.0 and $\Delta E$ was smaller than 4.0
Bad: $\Delta L^*$ was 3.0 or greater or $\Delta E$ was 4.0 or greater

[Glossiness Evaluation]

Using a resin-coated aluminum sheet prepared by the below-mentioned method, its glossiness was measured. Specifically, based on the method of measurement for specular glossiness using a gloss meter (JIS Z 8741), a calibration was conducted using a black glass sample as a primary standard surface. It is to be noted that the incident angle and the reflection angle were both set to 60°. Next, regarding the surface of the coating film on the outer surface side of the resin-coated aluminum sheet, an evaluation was made as follows. As the gloss meter, a gloss meter "VG7000" manufactured by NIPPON DENSHOKU INDUSTRIES CO., LTD. was used.

A: Gloss (60°) was 88 or greater
B: Gloss (60°) was smaller than 88 but 85 or greater
C: Gloss (60°) was smaller than 85

(Example 1)

An aluminum base material of an A3104 alloy type, in an H19 temper, and with a sheet thickness of 0.27 mm was prepared. Further, after rolling oil on the aluminum base material was degreased by a known method, the aluminum base material was immersed in a treatment solution (deionized water of 95°C) (surface treatment step). It is to be noted that the treatment time was set to 8 seconds. Water was squeezed off between rollers, followed by drying in a dryer to obtain a surface-treated aluminum sheet with surface treatment layers, which contained aluminum hydroxide, formed in the same manner on both sides thereof. The film thickness and absorption peak ratio (Pa/Pb) on the surface treatment layers of the surface-treated aluminum sheet thus obtained were calculated and are presented in Table 1.

Next, in the case where the resin layer is a coating film, coated sheets (resin-coated aluminum sheets) were prepared by applying, with use of a bar coater, an epoxy acrylic-based coating formulation, a polyester phenol-based coating formulation, and a vinyl chloride organosol-based coating formulation as coating formulations for inner surface sides and an epoxy acrylic-based coating formulation (outer-surface clear coating formulation) as a coating formulation for outer surface sides onto the surface treatment layers of the surface-treated aluminum sheets thus obtained and baking them under conditions of 260°C × 90 seconds in a dryer oven. The coating film amounts of the coating formulations on the inner surface sides were set to 120 mg/dm$^2$, approximately (10 μm, approximately), and the coating film amount of the coating formulation on the outer surface side was set to 50 mg/dm$^2$ (4 μm, approximately).

In the case where the resin layer is a thermoplastic resin film, on the other hand, resin layers were thermocompression-bonded on the surface treatment layers of the surface-treated aluminum sheets thus obtained, so that resin-laminated sheets (resin-coated aluminum sheets) were prepared. Specifically, the resin-laminated sheets were prepared by the following two methods (i) and (ii).

(i) On a surface of a heated surface-treated aluminum sheet which would serve as the side of an inner surface of a lid of a heated surface-treated aluminum sheet, a stretched two-layer polyethylene terephthalate film (20 μm thickness) was laminated, followed by immersion in water for quenching to obtain a resin-laminated sheet. It is to be noted that, as the two-layer polyethylene terephthalate film, a film with two layers including, as a surface layer, a layer of polyethylene terephthalate in which isophthalic acid (IA) had been copolymerized at 2 mol% and, as a bottom layer, a layer of polyethylene terephthalate in which isophthalic acid (IA) had been copolymerized at 18 mol%, the two layers being laminated at a layer ratio of 4:1, was used. Then, a resin-coated aluminum sheet was prepared by applying, with use of a bar coater, an epoxy urea-based coating formulation (outer-surface clear coating formulation) onto a surface which would serve as the side of an outer surface of the lid and baking it under conditions of 185°C × 10 minutes in a dryer oven. The coating film amount of the coating formulation on the outer surface side was set to 50 mg/dm$^2$ (4 μm, approximately).

(ii) On one side, which would serve as the side of an outer surface of a lid of a heated surface-treated aluminum sheet, a stretched polyethylene terephthalate film was laminated, followed by immersion in water for quenching to obtain a resin-laminated sheet. It is to be noted that, as the film, a film obtained by applying beforehand, on the side of a to-be-laminated surface, a 1 μm thickness of a polyester phenol-based adhesion primer to a polyethylene terephthalate film (30 μm thickness) in which isophthalic acid (IA) had been copolymerized at 11 mol% was used. Then, a resin-coated aluminum sheet was prepared by applying, with use of a bar coater, an epoxy urea-based coating formulation (outer-surface clear coating formulation) onto a surface which would serve as the side of an outer surface of the lid and baking it under conditions of 185°C × 10 minutes in a dryer oven.

On the resin-coated aluminum sheets thus obtained, evaluations of coating film adhesiveness (T-peel evaluation), resin adhesiveness (180° peel evaluation), openability (feathering evaluation), corrosion resistance (coated sheets, can lids), and color tones and glossiness on the outer surfaces of the lids were conducted. Individual evaluation results are as presented in Table 2, Table 3, and Table 4.

(Example 2)

The immersion time (treatment time) in the treatment solution in the surface treatment step was set as in Table 1. Except for this, the procedures of Example 1 were followed. The results are presented in Table 2, Table 3, and Table 4.

(Example 3)

An aluminum base material of an A5182 alloy type, in an H19 temper, and with a sheet thickness of 0.235 mm was prepared. Further, after rolling oil on the aluminum base material was degreased by a known method, the aluminum base material was immersed in a treatment solution (deionized water of 95°C) (surface treatment step). It is to be noted that the treatment time was set to 5 seconds. Water was squeezed off between rollers, followed by drying in a dryer to obtain a surface-treated aluminum sheet with surface treatment layers, which contained aluminum hydroxide, formed on both sides thereof. The film thickness and absorption peak ratio (Pa/Pb) on the surface treatment layer of the surface-treated aluminum sheet thus obtained were calculated and are presented in Table 1. Except for this, the procedures of Example 1 were followed. The results are presented in Table 2, Table 3, and Table 4.

(Example 4)

The immersion time (treatment time) in the treatment solution in the surface treatment step was set as in Table 1. Except for this, the procedures of Example 1 were followed. The results are presented in Table 2, Table 3, and Table 4.

(Example 5)

The immersion time (treatment time) in the treatment solution in the surface treatment step was set as in Table 1. Except for this, the procedures of Example 1 were followed. The results are presented in Table 2, Table 3, and Table 4.

(Comparative Example 1)

An aluminum base material of an A3104 alloy type, in an H18 temper, and with a sheet thickness of 0.27 mm was prepared. After rolling oil on the aluminum base material was degreased by the known method, evaluations similar to those in Example 1 were conducted without conducting surface treatment. The results are presented in Table 2, Table 3, and Table 4. The film naturally formed after the degreasing was a film made primarily of amorphous alumina, and the absorbance peak ratio (Pa/Pb) was 13.98. The results are presented in Table 1.

(Comparative Example 2)

The immersion time (treatment time) in the treatment solution in the surface treatment step was set as in Table 1. Except for this, the procedures of Example 1 were followed. The results are presented in Table 2, Table 3, and Table 4.

(Comparative Example 3)

An aluminum base material of an A5182 alloy type, in an H19 temper, and with a sheet thickness of 0.235 mm was prepared. After rolling oil on the aluminum base material was degreased by the known method, evaluations similar to those in Example 1 were conducted without conducting surface treatment. The results are presented in Table 2, Table 3, and Table 4. The film naturally formed after the degreasing was a film made primarily of amorphous alumina, and the absorbance peak ratio (Pa/Pb) was 8.523. The results are presented in Table 1.

(Comparative Example 4)

The immersion time (treatment time) in the treatment solution in the surface treatment step was set as in Table 1. Except for this, the procedures of Example 1 were followed. The results are presented in Table 2, Table 3, and Table 4.

(Reference Example)

Using an aluminum alloy sheet having chromate phosphate treatment films, evaluations were conducted as in Example 1. The results are presented in Table 2, Table 3, and Table 4.

[Table 1]

| | Aluminum base material | Treatment time (sec) | Measurement results of surface treatment layer | | | |
|---|---|---|---|---|---|---|
| | | | Film thickness (nm) | Absorbance (Abs) peak Pa | Absorbance (Abs) peak Pb | Pa/Pb ratio |
| Ex. 1 | Alloy type A3104 | 8 | 11.8 | 0.0171 | 0.0085 | 2.006 |
| Ex. 2 | | 15 | 46.3 | 0.0226 | 0.0667 | 0.339 |

(continued)

| | Aluminum base material | Treatment time (sec) | Measurement results of surface treatment layer | | | |
|---|---|---|---|---|---|---|
| | | | Film thickness (nm) | Absorbance (Abs) peak Pa | Absorbance (Abs) peak Pb | Pa/Pb ratio |
| Ex. 3 | Alloy type A5182 | 5 | 6.9 | 0.0188 | 0.0059 | 3.173 |
| Ex. 4 | | 8 | 11.9 | 0.0186 | 0.0117 | 1.598 |
| Ex. 5 | | 15 | 37.5 | 0.0210 | 0.0673 | 0.313 |
| Comp. Ex. 1 | Alloy type A3104 | 0 | 3.9 | 0.0106 | 0.0008 | 13.980 |
| Comp. Ex. 2 | | 60 | 115.3 | 0.0307 | 0.2419 | 0.127 |
| Comp. Ex. 3 | Alloy type A5182 | 0 | 4.5 | 0.0149 | 0.0017 | 8.523 |
| Comp. Ex. 4 | | 30 | 76.6 | 0.0252 | 0.1868 | 0.135 |
| Ref. Ex. | Alloy type A3104 | - | - | - | - | - |

[Table 2A]

| | Aluminum base material | Evaluation results of coating formulation for inner surface sides | | | | | | |
|---|---|---|---|---|---|---|---|---|
| | | Epoxy acrylic-based coating formulation | | | | | | |
| | | Coating film adhesiveness evaluation (T-peel evaluation) | | Openability evaluation (feathering evaluation) | | Corrosion resistance evaluation (coated sheet) | Corrosion resistance evaluation (can lid) | |
| | | Peel strength (N) | Evaluation | Film peel length (mm) | Evaluation | Evaluation | Rivet portion evaluation | Score portion evaluation |
| Ex. 1 | Alloy type A3104 | Interfacial separation | A | 0.3 | A | A | A | Good |
| Ex. 2 | | Interfacial separation | A | 0.2 | A | A | A | Good |
| Ex. 3 | Alloy type A5182 | Interfacial separation | A | 0.3 | A | B | A | Good |
| Ex. 4 | | Interfacial separation | A | 0.2 | A | A | A | Good |
| Ex. 5 | | Interfacial separation | A | 0.1 | A | B | A | Good |
| Comp. Ex. 1 | Alloy type A3104 | Interfacial separation | A | 1.0 | C | C | C | Bad |
| Comp. Ex. 2 | | Interfacial separation | A | 0.0 | A | B | A | Good |
| Comp. Ex. 3 | Alloy type A5182 | Interfacial separation | A | 0.5 | C | C | C | Good |
| Comp. Ex. 4 | | 12.2 | D | 0.2 | A | B | B | Good |
| Ref. Ex. | Alloy type A3104 | Interfacial separation | A | 0.1 | A | C | A | Good |

**EP 4 741 531 A1**

[Table 2B]

| | Aluminum base material | Evaluation results of coating formulation for inner surface sides | | | | | | |
|---|---|---|---|---|---|---|---|---|
| | | Polyester phenol-based coating formulation | | | | | | |
| | | Coating film adhesiveness evaluation (T-peel evaluation) | | Openability evaluation (feathering evaluation) | | Corrosion resistance evaluation (coated sheet) | Corrosion resistance evaluation (can lid) | |
| | | Peel strength (N) | Evaluation | Film peel length (mm) | Evaluation | Evaluation | Rivet portion evaluation | Score portion evaluation |
| Ex. 1 | Alloy type A3104 | Interfacial separation | A | 0.2 | A | A | A | Good |
| Ex. 2 | | Interfacial separation | A | 0.4 | B | A | A | Good |
| Ex. 3 | Alloy type A5182 | Interfacial separation | A | 0.1 | A | B | A | Good |
| Ex. 4 | | Interfacial separation | A | 0.1 | A | A | A | Good |
| Ex. 5 | | Interfacial separation | A | 0.1 | A | A | A | Good |
| Comp. Ex. 1 | Alloy type A3104 | Interfacial separation | A | 0.6 | C | C | A | Bad |
| Comp. Ex. 2 | | Interfacial separation | A | 0.1 | A | A | A | Good |
| Comp. Ex. 3 | Alloy type A5182 | Interfacial separation | A | 0.1 | A | C | A | Good |
| Comp. Ex. 4 | | 15.7 | B | 0.1 | A | B | A | Good |
| Ref. Ex. | Alloy type A3104 | Interfacial separation | A | 0.3 | A | A | A | Good |

[Table 2C]

| | Aluminum base material | Evaluation results of coating formulation for inner surface sides | | | | | | |
|---|---|---|---|---|---|---|---|---|
| | | Vinyl chloride organosol-based coating formulation | | | | | | |
| | | Coating film adhesiveness evaluation (T-peel evaluation) | | Openability evaluation (feathering evaluation) | | Corrosion resistance evaluation (coated sheet) | Corrosion resistance evaluation (can lid) | |
| | | Peel strength (N) | Evaluation | Film peel length (mm) | Evaluation | Evaluation | Rivet portion evaluation | Score portion evaluation |
| Ex. 1 | Alloy type A3104 | 17.0 | A | 0.6 | A | A | B | Good |
| Ex. 2 | | 15.0 | B | 0.8 | A | A | B | Good |

18

(continued)

| | Aluminum base material | Evaluation results of coating formulation for inner surface sides | | | | | | |
| | | Vinyl chloride organosol-based coating formulation | | | | | | |
| | | Coating film adhesiveness evaluation (T-peel evaluation) | | Openability evaluation (feathering evaluation) | | Corrosion resistance evaluation (coated sheet) | Corrosion resistance evaluation (can lid) | |
| | | Peel strength (N) | Evaluation | Film peel length (mm) | Evaluation | Evaluation | Rivet portion evaluation | Score portion evaluation |
|---|---|---|---|---|---|---|---|---|
| Comp. Ex. 1 | Alloy type A3104 | 8.0 | D | 2.1 | C | C | C | Bad |
| Comp. Ex. 2 | | 11.0 | D | 0.8 | A | A | B | Good |
| Ref. Ex. | Alloy type A3104 | 18.0 | A | 1.2 | B | A | B | Good |

[Table 3A]

| | Aluminum base material | Evaluation results of coating formulation for outer surface sides | | | | | |
| | | Epoxy acrylic-based coating formulation | | | | | |
| | | Color tone evaluation | | | | Glossiness evaluation | |
| | | L* value | Δ L * | ⌀ E | Evaluation | Gloss 60° | Evaluation |
|---|---|---|---|---|---|---|---|
| Ex. 1 | Alloy type A3104 | 88.14 | 0.09 | 0.66 | Good | 92 | A |
| Ex. 2 | | 87.88 | 0.35 | 1.54 | Good | 89 | A |
| Comp. Ex. 1 | | 88.23 | Reference | Reference | Good | 94 | A |
| Comp. Ex. 2 | | 85.16 | 3.07 | 3.18 | Bad | 84 | C |
| Ref. Ex. | | 89.06 | -0.83 | 0.86 | Good | 94 | A |

[Table 3B]

| | Aluminum base material | Evaluation results of coating formulation for outer surface sides | | | |
| | | Epoxy urea-based coating formulation | | | |
| | | Color tone evaluation | | | |
| | | L* value | Δ L* | ⌀ E | Evaluation |
|---|---|---|---|---|---|
| Ex. 3 | Alloy type A5182 | 82.48 | 0.19 | 0.35 | Good |
| Ex. 4 | | 81.54 | 1.13 | 1.70 | Good |
| Ex. 5 | | 80.67 | 2 | 3.96 | Good |
| Comp. Ex. 3 | | 82.67 | Reference | Reference | Good |
| Comp. Ex. 4 | | 77.86 | 4.81 | 7.71 | Bad |

[Table 4A]

| | Aluminum base material | Evaluation results of thermoplastic resin film | | | | | |
| | | Resin adhesiveness evaluation (180° peel evaluation) | | Openability evaluation (feathering evaluation) | | Corrosion resistance evaluation (can lid) | |
| | | Peel strength (N) | Evaluation | Film peel length (mm) | Evaluation | Rivet portion evaluation | Score portion evaluation |
|---|---|---|---|---|---|---|---|
| Ex. 1 | Alloy type A3104 | 16.4 | Good | 0.5 | A | A | Good |
| Ex. 2 | | 16.2 | Good | 1.5 | B | A | Good |
| Ex. 3 | Alloy type A5182 | 13.7 | Good | 0.6 | B | A | Good |
| Ex. 4 | | 14.4 | Good | 0.5 | A | A | Good |
| Ex. 5 | | 14.9 | Good | 1.6 | B | A | Good |
| Comp. Ex. 1 | Alloy type A3104 | 15.9 | Good | 1.1 | B | B | Good |
| Comp. Ex. 2 | | 14.2 | Good | 2.2 | C | B | Good |
| Comp. Ex. 3 | Alloy type A5182 | 15.5 | Good | 0.6 | A | B | Good |
| Comp. Ex. 4 | | 14.1 | Good | 1.8 | B | C | Good |
| Ref. Ex. | Alloy type A3104 | 16.6 | Good | 1.5 | B | A | Good |

[Table 4B]

| | Aluminum base material | Evaluation results of thermoplastic resin film + adhesion primer | | | | | |
| | | Resin adhesiveness evaluation (180° peel evaluation) | | Openability evaluation (feathering evaluation) | | Corrosion resistance evaluation (can lid) | |
| | | Peel strength (N) | Evaluation | Film peel length (mm) | Evaluation | Rivet portion evaluation | Score portion evaluation |
|---|---|---|---|---|---|---|---|
| Ex. 1 | Alloy type A3104 | 16.1 | Good | 0.5 | A | B | Good |
| Ex. 2 | | 14.8 | Good | 1.3 | B | B | Good |
| Ex. 3 | Alloy type A5182 | 13.3 | Good | 0.4 | A | A | Good |
| Ex. 4 | | 11.5 | Good | 0.6 | A | A | Good |
| Ex. 5 | | 11.5 | Good | 1.1 | B | A | Good |
| Comp. Ex. 1 | Alloy type A3104 | 22.5 | Good | 0.8 | A | C | Bad |
| Comp. Ex. 2 | | 16.3 | Good | 1.6 | B | C | Good |
| Comp. Ex. 3 | Alloy type A5182 | 14.3 | Good | 0.7 | A | A | Good |
| Comp. Ex. 4 | | 11.7 | Good | 4.0 | C | C | Good |
| Ref. Ex. | Alloy type A3104 | 18.5 | Good | 1.0 | B | B | Good |

From the above Examples and Comparative Examples, it was able to confirm that, in the evaluations inferring resin-coated aluminum can lids, resin adhesiveness, corrosion resistance, and a color tone are available in combination owing to the setting of the value of Pa/Pb of the surface treatment layer to 0.14 to 3.50.

[Industrial Applicability]

The resin-coated aluminum can lids of this disclosure are suited for applications for can lids of beverage cans, food cans, and the like.

[Reference Signs List]

100: Resin-coated aluminum can lid
10: Aluminum base material
20: Surface treatment layer
30: Resin layer

**Claims**

1.  A resin-coated aluminum can lid comprising:

    an aluminum base material;
    a surface treatment layer formed on at least one side of the aluminum base material; and
    a resin layer directly or indirectly formed on the surface treatment layer,
    wherein the surface treatment layer contains aluminum hydroxide, and has a Pa/Pb value of 0.14 to 3.50 when, in an infrared absorption spectrum measured by a Fourier transform infrared spectrophotometer, a height of an absorbance peak at wavenumbers of 850 to 1000 $cm^{-1}$ is defined as Pa and a height of an absorbance peak at wavenumbers of 1000 to 1200 $cm^{-1}$ is defined as Pb.

2.  The resin-coated aluminum can lid according to claim 1, wherein the surface treatment layer has a thickness of 2 nm or greater but smaller than 100 nm.

3.  The resin-coated aluminum can lid according to claim 1 or 2, wherein an L* value at a can lid outer surface is 85.5 or greater.

4.  The resin-coated aluminum can lid according to claim 1 or 2, wherein specular glossiness on a can lid outer surface is 85 or greater in terms of 60° gloss value in accordance with JIS Z 8741:1997.

5.  The resin-coated aluminum can lid according to claim 1 or 2, wherein the resin layer is a coating film.

6.  The resin-coated aluminum can lid according to claim 5, wherein the coating film is at least one selected from an epoxy acrylic-based coating film, a polyester phenol-based coating film, a polyester amino-based coating film, and a vinyl chloride organosol-based coating film.

7.  The resin-coated aluminum can lid according to claim 1 or 2, wherein the resin layer is a thermoplastic resin film.

8.  The resin-coated aluminum can lid according to claim 7, wherein the thermoplastic resin film is crystalline polyester.

9.  The resin-coated aluminum can lid according to claim 7 or 8, wherein the thermoplastic resin film is formed on the surface treatment layer via an adhesion primer layer.

10. A resin-coated aluminum sheet comprising:

    an aluminum base material;
    a surface treatment layer formed on at least one side of the aluminum base material; and
    a coating film formed on the surface treatment layer,
    wherein the surface treatment layer contains aluminum hydroxide, and has a Pa/Pb value of 0.14 to 3.50 when, in an infrared absorption spectrum measured by a Fourier transform infrared spectrophotometer, a height of an absorbance peak at wavenumbers of 850 to 1000 $cm^{-1}$ is defined as Pa and a height of an absorbance peak at wavenumbers of 1000 to 1200 $cm^{-1}$ is defined as Pb.

**EP 4 741 531 A1**

11. A resin-coated aluminum can lid made of the resin-coated aluminum sheet according to claim 10.

FIG. 1

100

FIG. 2

FIG. 3

(A)

```
                                              ╱30
┌─────────────────────────────────────────┐
│▓▓▓▓▓▓▓▓▓▓▓▓▓▓▓▓▓▓▓▓▓▓▓▓▓▓▓▓▓▓▓▓▓▓▓▓▓▓▓▓▓▓│
├─────────────────────────────────────────┤  ╱20
│/////////////////////////////////////////│
├─────────────────────────────────────────┤
│                                         │  ╱10
│                                         │
└─────────────────────────────────────────┘
```

(B)

```
                                              ╱30
┌─────────────────────────────────────────┐
│▓▓▓▓▓▓▓▓▓▓▓▓▓▓▓▓▓▓▓▓▓▓▓▓▓▓▓▓▓▓▓▓▓▓▓▓▓▓▓▓▓▓│
├─────────────────────────────────────────┤  ╱20
│/////////////////////////////////////////│
├─────────────────────────────────────────┤
│                                         │  ╱10
├─────────────────────────────────────────┤
│/////////////////////////////////////////│  ╱20
├─────────────────────────────────────────┤
│▓▓▓▓▓▓▓▓▓▓▓▓▓▓▓▓▓▓▓▓▓▓▓▓▓▓▓▓▓▓▓▓▓▓▓▓▓▓▓▓▓▓│  ╱30
└─────────────────────────────────────────┘
```

FIG. 4

(A)

300

30'

20'

10'

(B)

310

30'

20'

10'

20'

30'

FIG. 5

FIG. 6

RESIN-COATED ALUMINUM SHEET

NYLON FILM

RESIN-COATED ALUMINUM SHEET

FIG. 7

(a)

30mm

15mm

100mm

15mm

(b)

Aluminum sheet

Fixed
to the jig

Laminating film

Measuring
peeling load

FIG. 8

130mm

5mm

40mm

5mm

SURFACE FOR EVALUATION

SCORE

FIG. 9

RIVET    SCORE

## INTERNATIONAL SEARCH REPORT

| International application No. |
| --- |
| **PCT/JP2024/024499** |

### A. CLASSIFICATION OF SUBJECT MATTER

*C23C 22/66*(2006.01)i; *B32B 15/04*(2006.01)i; *B32B 15/20*(2006.01)i
FI: C23C22/66; B32B15/20; B32B15/04 Z

According to International Patent Classification (IPC) or to both national classification and IPC

### B. FIELDS SEARCHED

Minimum documentation searched (classification system followed by classification symbols)

C23C22/00-22/86; B32B1/00-43/00; B65D1/00-90/66

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2000-239778 A (KABUSHIKI KAISHA KOBE SEIKO SHO) 05 September 2000 (2000-09-05) claims 1-11, paragraphs [0027]-[0028], [0044]-[0060], fig. 1 | 10 |
| A | | 1-9, 11 |
| A | JP 2007-107033 A (FURUKAWA-SKY ALUMINUM CORP.) 26 April 2007 (2007-04-26) | 1-11 |
| A | JP 3-193884 A (MITSUBISHI MATERIALS CORPORATION) 23 August 1991 (1991-08-23) | 1-11 |
| A | JP 2017-220467 A (TAIYO YUDEN CO., LTD.) 14 December 2017 (2017-12-14) | 1-11 |
| A | JP 2021-62497 A (SINTOKOGIO, LTD.) 22 April 2021 (2021-04-22) | 1-11 |
| A | JP 2006-200007 A (FURUKAWA-SKY ALUMINUM CORP.) 03 August 2006 (2006-08-03) | 1-11 |
| P, X | WO 2023/136265 A1 (TOYO KOHAN CO., LTD.) 20 July 2023 (2023-07-20) claims 7-11, paragraphs [0062]-[0082], [0089]-[0104], [0129]-[0163] | 1-11 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **25 September 2024** | **08 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/024499**

| Patent document cited in search report | | | Publication date (day/month/year) | Patent family member(s) | | | Publication date (day/month/year) |
|---|---|---|---|---|---|---|---|
| JP | 2000-239778 | A | 05 September 2000 | (Family: none) | | | |
| JP | 2007-107033 | A | 26 April 2007 | (Family: none) | | | |
| JP | 3-193884 | A | 23 August 1991 | (Family: none) | | | |
| JP | 2017-220467 | A | 14 December 2017 | US | 2017/0352866 | A1 | |
| | | | | CN | 107464698 | A | |
| JP | 2021-62497 | A | 22 April 2021 | US | 2021/0107270 | A1 | |
| | | | | DE | 102020212599 | A1 | |
| | | | | CN | 112644000 | A | |
| JP | 2006-200007 | A | 03 August 2006 | (Family: none) | | | |
| WO | 2023/136265 | A1 | 20 July 2023 | JP | 2023-102210 | A | |
| | | | | JP | 2024-85510 | A | |

Form PCT/ISA/210 (patent family annex) (July 2022)

**REFERENCES CITED IN THE DESCRIPTION**

**Patent documents cited in the description**

- JP 2003013253 A
- JP 2004216801 A
- JP 2007176072 A
- JP H11012762 A